# EUROPÄISCHE PATENTSCHRIFT

(11) **EP 0 620 165 B1**
(45) Veröffentlichungstag und Bekanntmachung des Hinweises auf die Patenterteilung: **04.06.1997**
(21) Anmeldenummer: 94810189.4
(22) Anmeldetag: 28.03.1994
(51) Int. Cl.: B65D 75/58, B32B 15/08, B65D 77/18

(54) **Schlauchbeutel aus Verbundfolie**
Tubular container of multi-layer film
Emballage-sachet de film composé

(30) Priorität: 14.04.1993 DE 4312192
(43) Veröffentlichungstag der Anmeldung: 19.10.1994
(73) Patentinhaber: HILTI Aktiengesellschaft, 9494 Schaan (LI)
(72) Erfinder: Sedlmeier, Andreas, D-86932 Ummendorf (DE)
(74) Vertreter: Wildi, Roland

(56) Entgegenhaltungen:
- EP-A- 0 363 693
- US-A- 4 762 514

## Beschreibung

Die Erfindung betrifft einen Schlauchbeutel aus Verbundfolie mit einer Metallfolie und zumindest einer aussenliegenden Kunststoffolie.

Schlauchbeutel der hier in Rede stehenden Art werden vorwiegend zur Lagerung von aushärtbaren, insbesondere Mehrkomponentenmassen, wie beispielsweise Mörtelmassen und dergleichen , verwendet. Nach dem Verfüllen mit einer Komponente der Massen werden die Schlauchbeutel verschlossen, beispielsweise durch Verschweissen oder durch Verschliessen ihrer Enden mittels eines Verschlussclips, beispielsweise aus Metall. In diesem gefüllten Zustand werden die Schlauchbeutel zur Verarbeitung der Massen Auspressgeräten zugeführt, wobei unter Einwirkung geräteseitiger Teile die Schlauchbeutel durch Zusammenpressen entleert werden. Um eine solche Entleerung zu ermöglichen, ist eine Öffnung der Schlauchbeutel erforderlich.

Zur Öffnung der Schlauchbeutel im vorgenannten Sinne sind verschiedene Möglichkeiten bekannt. So ist es beispielsweise zum einen bekannt, die Schlauchbeutel vor dem Einführen in die Auspressgeräte mittels spezieller Schneidvorrichtungen aufzuschneiden. Diese Art der Öffnung hat den Nachteil, dass unmittelbar nach dem Aufschneiden Masse aus dem Schlauchbeutel austreten kann und es so zu einer Verschmutzung sowohl der Auspressgeräte als auch deren Umgebung kommen kann. Aus diesem Grunde ist es zum anderen weit verbreitet, die Auspressgeräte mit einer Öffnungshilfe in Form eines Aufstechdorns oder einer Aufstechkante zu versehen. Das Zusammenwirken einer solchen Öffnungshilfe mit den in das Auspressgerät eingeführten Schlauchbeuteln soll zur Folge haben, dass der Schlauchbeutel an dieser Stelle geöffnet wird, was bei geeigneter Auslegung des Auspressgerätes beispielsweise erst nach dessen Schliessen erfolgen soll.

In der Praxis hat sich nun aber gezeigt, dass die vorgenannte bevorzugte Öffnungsmethode der Schlauchbeutel mit gewissen Schwierigkeiten verbunden ist und nicht immer zufriedenstellend zum Ziel führt. Dies rührt daher, dass als Material für die Schlauchbeutel Verbundfolien verwendet werden, die eine relativ hohe mechanische Festigkeit aufweisen. Beispielsweise bestehen die Verbundfolien aus einer oder mehreren Kunststoffolien sowie einer oder gegebenenfalls auch mehreren Metallfolien. Zum Schutze insbesondere chemischer Einwirkungen sind die Verbundfolien aber immer so ausgelegt, dass zumindest aussen eine Kunststoffolie vorgesehen ist.

An Materialien für die Verbundfolien finden in bevorzugter Weise als Kunststoff Polyäthylen und als Metall Aluminium Anwendung.

Die aus lagerungs- und transporttechnischen Gründen erforderliche hohe mechanische Festigkeit der verwendeten Verbundfolien wirkt sich somit nachteilig auf den Öffnungsvorgang der Schlauchbeutel aus. So reichen die vorgesehenen geräteseitigen Öffnungshilfen oftmals nicht aus, die mechanische Festigkeit der Verbundfolien zu überwinden und so die Schlauchbeutel zum gewünschten Zeitpunkt an der richtigen Stelle zu öffnen.

In der EP-A-0 363 693 ist eine Verpackung für Kaffee beschrieben, die aus einer Verbundfolie gefertigt ist. Die Verbundfolie besteht aus Kunststoffolien, die eine Metallfolie umhüllen. Die Verpackung weist eine sich im wesentlichen über die gesamte Breite der Verpackung erstreckenden Aufreisslinie auf, entlang der die Verpackung von Hand aufreissbar ist. Die Aufreisslinie ist entweder durch einen den gesamten Folienverbund penetrierenden Schlitz oder durch Kerben in beiden an die Metallfolie angrenzenden Kunststoffolien gebildet. Im Fall des durch den Folienverbund reichenden Schlitzes wird die äussere Kunststoffolie verletzt und ist die Metallfolie einem Chemikalienangriff ausgesetzt. Bei den Kerben werden die die Metallfolien einschliessenden Kunststoffolien soweit in ihrer Wandstärke reduziert, dass die mechanische Stabilität und die Widerstandsfähigkeit gegen Chemikalienangriff der äusseren Kunststoffolie beeinträchtigt ist.

Aus der den nächsten Stand der Technik bildenden US-A-4,762,514 ist eine Getränkeverpackung bekannt, die aus einem Kunststoffolien und eine Metallfolie umfassenden Folienverbund gefertigt ist. In ihrer Stirnseite besitzt die Verpackung einen eng begrenzten, aufstechbaren Öffnungsbereich. Der Öffnungsbereich ist durch Einschnitte gebildet, die radial oder parallel zueinander angeordnet sind. Die mit einem Laser hergestellten Einschnitte reichen von der äussersten Kunststoffschicht bis zur Metallschicht der Verbundfolie. Dadurch wird die äusserste Kunststoffschicht verletzt und im Bereich der Einschnitte sogar bis zur darunter liegenden Metallschicht abgetragen. Dadurch kann die freigelegte Metallschicht von Chemikalien angegriffen werden.

Der Erfindung liegt die Aufgabe zugrunde, einen Schlauchbeutel zu schaffen, welcher ein zuverlässiges Öffnen im Zusammenwirken mit geräteseitigen Öffnungshilfen sicherstellt. Dabei soll die Schutzfunktion der äusseren Kunststoffolie insbesondere gegen chemische Einwirkungen erhalten bleiben.

Erfindungsgemäss wird die Aufgabe dadurch gelöst, dass der aufstechbare Öffnungsbereich ein in der aussen liegenden Kunststoffolie als Sollbruchstelle wirkender Schwächungsbereich ist, der durch thermische Einwirkung hergestellt ist, wobei die aussen liegende Kunststoffolie im Schwächungsbereich unverletzt bleibt und ihre Wandstärke im wesentlichen unverändert ist.

Der durch thermische Einwirkung hergestellte Schwächungsbereich schwächt somit an einer bestimmten Stelle die mechanische Festigkeit des Schlauchbeutels. Diese Stelle wird so gewählt, dass sie mit den geräteseitigen Öffnungshilfen in Verbindung tritt. Dadurch ist nebst der Beibehaltung der mechanischen Festigkeit des Schlauchbeutels insgesamt ein zuverlässiges Öffnen zum gewünschten Zeitpunkt und an der vorgesehenen Stelle in Verbindung mit geräteseitigen Öffnungshilfen gewährleistet.

Der Schwächungsbereich wird durch thermische Einwirkung hergestellt. Dies kann in einfacher Weise dadurch geschehen, dass auf die aussenliegende Kunststoffolie Wärme aufgebracht wird, die über dem Schmelzpunkt dieser Kunststoffolie liegt. Dadurch tritt in diesem Bereich eine die mechanische Festigkeit der aussenliegenden Kunststoffolie herabsetzende Materialversprödung ein.

Je nach Dicke und Beschaffenheit der aussenliegenden Kunststoffolie kann der Grad der thermischen Einwirkung, beispielsweise Zeitdauer und Temperatur, angepasst werden.

Aufgrund der in der Verbundfolie vorhandenen Metallfolie findet die thermische Einwirkung aber durch entsprechende Wärmeableitung ihren Abschluss an der Metallfolie. Dies bedeutet, dass der Schwächungsbereich lediglich von aussen bis zur Metallfolie reichen kann, aber niemals auch die Metallfolie oder weitere, nach der Metallfolie innenliegende, Kunststoffolien umfasst.

Je nach Ausgestaltung der Anwendung findenden geräteseitigen Öffnungshilfen kann der Schwächungsbereich punktförmig, linienförmig oder ringförmig ausgebildet sein. Dabei kann punktförmig auch ein gewisser Flächenbereich verstanden werden.

Die thermische Einwirkung kann beispielsweise induktiv oder direkt mittels Elektroden erfolgen, wobei die verwendeten Elektroden der Form des Schwächungsbereiches angepasst sein können.

Anstelle der Verwendung einer separaten Elektrode besteht eine einfache Möglichkeit darin, den dem Verschluss des Schlauchbeutels dienenden Verschlussclip zu verwenden, wenn dieser aus Metall besteht. In einem solchen Falle kann der Verschlussclip induktiv erwärmt werden, so dass damit in bevorzugter Weise der Schwächungsbereich im Bereich des Verschlussclips angeordnet ist.

Die Erfindung wird nachstehend anhand von Zeichnungen, welche ein Ausführungsbeispiel wiedergeben, näher erläutert. Es zeigen:
- Fig. 1: einen Endbereich eines Schlauchbeutels mit erfindungsgemässem Schwächungsbereich;
- Fig. 2: einen vergrösserten Schnitt durch die Verbundfolie des Folienbeutels der Fig. 1 mit Schwächungsbereich.

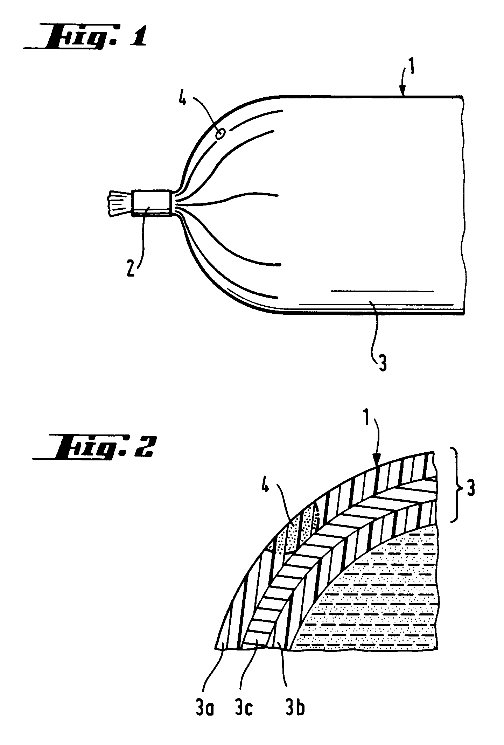

Die Fig. 1 zeigt einen Endbereich eines Schlauchbeutels 1, der mit einem Verschlussclip 2 verschlossen ist. Der Schlauchbeutel 1 besteht aus einer Verbundfolie 3, welche einen Schwächungsbereich 4 aufweist. Dieser Schwächungsbereich 4 ist stirnseitig am Schlauchbeutel 1 angeordnet, so dass er mit einem gegebenenfalls vorhandenen, geräteseitigen Aufstechdorn als Öffnungshilfe zusammenwirken kann.

Die Fig. 2 zeigt einen Schnitt durch die Verbundfolie 3 des Schlauchbeutels 1 in vergrösserter Darstellung. Aus dieser Darstellung ist deutlich der Schwächungsbereich 4 zu sehen, welcher durch thermische Einwirkung hergestellt wurde.

Wie die Fig. 2 deutlich zeigt, besteht die Verbundfolie 3 aus mehreren Folien, nämlich in diesem Beispiel aus einer aussenliegenden Kunststoffolie 3a, einer innenliegenden Kunststoffolie 3b und einer dazwischenliegenden Metallfolie 3c. Die Fig. 2 zeigt ferner, wie der Schwächungsbereich 4 lediglich die aussenliegende Kunststoffolie 3a umfasst, jedoch durch entsprechende Wärmeableitung bei der Herstellung an der Metallfolie 3c ein Ende gefunden hat. Damit ist weder die Metallfolie 3c noch die innenliegende Kunststoffolie 3b durch thermische Einwirkung geschwächt worden. Insgesamt ist die für die mechanische Festigkeit der Verbundfolie 3 massgebende Stärke im Schwächungsbereich 4 um die Stärke der aussenliegenden Kunststoffolie 3a verringert worden. Die Öffnung des Schlauchbeutels 1 durch geräteseitige Öffnungshilfen wird damit an dieser Stelle erleichtert.

## Patentansprüche

1. Schlauchbeutel aus Verbundfolie (3) mit einer Metallfolie (3c) und zumindest einer aussenliegenden Kunststoffolie (3a), der stirnseitig einen eng begrenzten, aufstechbaren Öffnungsbereich (4) aufweist, **dadurch gekennzeichnet**, dass der aufstechbare Öffnungsbereich (4) ein in der aussen liegenden Kunststoffolie (3a) als Sollbruchstelle wirkender Schwächungsbereich ist, der durch thermische Einwirkung hergestellt ist, wobei die aussen liegende Kunststoffolie (3a) im Schwächungsbereich unverletzt bleibt und ihre Wandstärke im wesentlichen unverändert ist.

2. Schlauchbeutel nach Anspruch 1, dadurch gekennzeichnet, dass der Schwächungsbereich (4) punktförmig ausgestaltet ist.

3. Schlauchbeutel nach Anspruch 1, dadurch gekennzeichnet, dass der Schwächungsbereich linienförmig ausgestaltet ist.

4. Schlauchbeutel nach Anspruch 1, dadurch gekennzeichnet, dass der Schwächungsbereich ringförmig ausgestaltet ist.

5. Schlauchbeutel nach einem der Ansprüche 1 bis 4, dadurch gekennzeichnet, dass der Schwächungsbereich im Bereich eines Verschlussclips (2) angeordnet ist.

## Claims

1. Tubular bag of a composite foil (3) with a metal foil (3c) and at least one externally placed plastic foil (3a), comprising at the end a narrow defined opening area (4) which can be pierced open, **characterised in that** the pierceable opening area (4) is a thermally produced weakened area serving as a nominal breaking point in the externally placed plastic foil (3a), and the externally placed plastic foil (3a) in the weakened area remains undamaged and its wall thickness essentially unchanged.

2. Tubular bag according to Claim 1, **characterised in that** the weakened area (4) is pointed.

3. Tubular bag according to Claim 1, **characterised in that** the weakened area is in the shape of a line.

4. Tubular bag according to Claim 1, **characterised in that** the weakened area is ringshaped.

5. Tubular bag according to one of Claims 1 to 4, **characterised in that** the weakened area is placed in the area of a closure clip (2).

## Revendications

1. Sachet tubulaire souple en feuille composite (3), comprenant une feuille métallique (3c) et au moins une feuille de matière plastique (3a) située à l'extérieur, qui présente du côté frontal une zone d'ouverture (4) étroitement limitée perçable, **caractérisé en ce** que la zone d'ouverture (4) perçable est une zone d'affaiblissement prévue dans la feuille de matière plastique (3a) située à l'extérieur et agissant comme zone de rupture imposée, qui est réalisée par une action thermique, la feuille de matière plastique (3a) située à l'extérieur restant intacte dans la zone d'affaiblissement et son épaisseur de paroi étant sensiblement inchangée.

2. Sachet tubulaire souple selon la revendication 1, caractérisé en ce que la zone d'affaiblissement (4) est de forme ponctuelle.

3. Sachet tubulaire souple selon la revendication 1, caractérisé en ce que la zone d'affaiblissement est de forme linéaire.

4. Sachet tubulaire souple selon la revendication 1, caractérisé en ce que la zone d'affaiblissement est de forme annulaire.

5. Sachet tubulaire selon l'une des revendications 1 à 4, caractérisé en ce que la zone d'affaiblissement est disposée dans la région d'un clip de fermeture (2).
